# EUROPEAN PATENT APPLICATION

(11) **EP 0 938 219 A2**
(43) Date of publication of application: **25.08.1999**
(21) Application number: 99300602.2
(22) Date of filing: 27.01.1999
(51) Int. Cl.: H04M 1/02

(54) **Collapsible telephone set**

(30) Priority: 19.02.1998 JP 3705998
(71) Applicant: ALPS ELECTRIC CO., LTD., Ota-ku Tokyo 145 (JP)
(72) Inventor: Wagatsuma, Toru, Furukawa-shi, Miyagi-ken (JP)
(74) Representative: Kensett, John Hinton

(57) **Abstract**

The collapsible telephone set of the present invention comprises one case (21), a switch (C) disposed in the one case and equipped with a rotary connector, another case (31), and a second corrector portion (33) disposed in the another case and having connector terminals, the first and second connector portions being connected together detachably so that both cases can be opened and closed in a collapsible manner.

## Description

The present invention relates to a collapsible telephone set, for example, a collapsible telephone set of a portable type wherein a flip (lid) with a microphone disposed therein is detachable from a body portion.

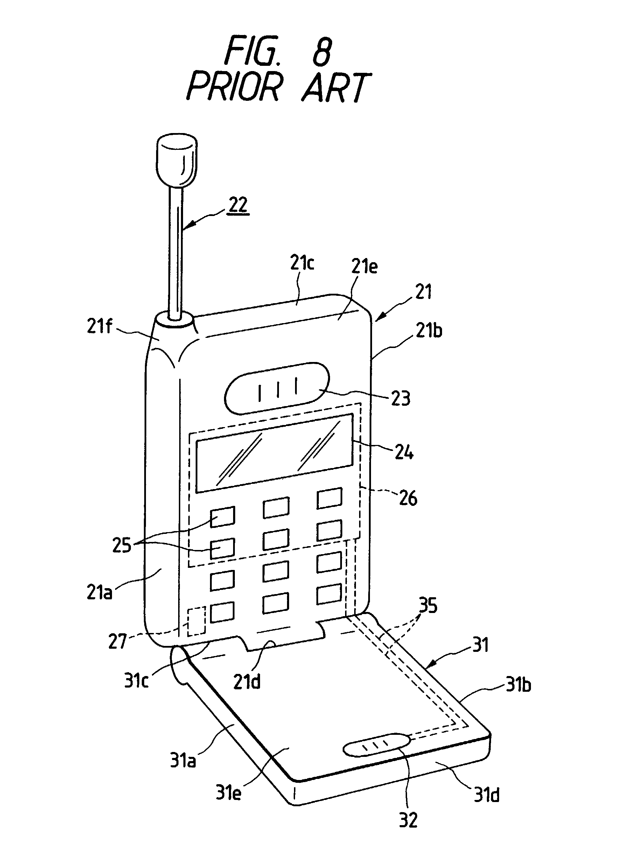

A conventional collapsible telephone set will be described below with reference to Fig. 8 which is a perspective view of the conventional telephone set.

As shown in Fig. 8, the conventional collapsible telephone set has a first case 21 of generally box-shape serving as a body portion and formed by molding from a synthetic resin and also has a second case 31 of generally box-shape formed also by molding from a synthetic resin and which is called a flip.

The first case 21 is surrounded on four sides with opposed side walls 21a, 21b and opposed upper and lower walls 21c, 21d and this surrounded space is closed by both a front wall 21e and a back wall (not shown), with a protuberance 21f being projected from an end portion of the upper wall 21c.

Within the first case 21 are disposed a voice signal conversion circuit 26 for converting at least a transmitting voice signal into an electric signal, a pair of connecting wires 35, 35 formed on, that is, a flexible printed circuit board and which inputs a transmitting voice signal to the voice signal conversion circuit 26, and a microswitch 27 for turning on and off a power supply in a power supply circuit (not shown).

In the front wall 21e of the first case 21 are mounted a receiving portion 23 which is a speaker for example, a display portion 24 formed by a liquid crystal display for example, and an operating portion 25 which comprises a plurality of push-button switches for example.

An antenna 22 is constituted of a metallic rod. The antenna 22 is disposed near and along the left-hand side wall 21a and is guided by the protuberance 21f of the first case 21 so that it can be drawn out from the protuberance 21f to the exterior of the first case 21 and can be retracted.

The second case 31 is surrounded on four sides with opposed side walls 31a, 31b and opposed upper and lower walls 31c, 31d and this surrounded space is closed by both a front wall 31e and a back wall (not shown). At a lower end position of the front wall 31e of the second case 31 is disposed a transmitting portion 32 which is a microphone for example. Within the second case 31 are disposed a pair of connecting wires 35, 35 for connection between the transmitting portion 32 and the voice signal conversion circuit 26, the connecting wires 35, 35 being formed on, that is, a flexible printed circuit board in an extended state from the first case 21.

The lower wall 21d of the first case 21 and the upper wall 31c of the second case 31 are connected together in a predetermined manner difficult to be disconnected such as the use of a hinge, so that both cases 21 and 31 can be folded together and hence can be opened and closed without disconnection.

Such a conventional, portable, collapsible telephone set is becoming more and more popular rapidly because the recent demand for the reduction of size and hence ease of carrying and convenience are satisfied. However, this conventional telephone set involves many restrictions in its structure and design because of the need for satisfying predetermined functions, and therefore it has been impossible to replace its flip (lid) freely. It is the present situation that a seal is affixed to the flip which covers the body of the collapsible telephone set or a picture is drawn thereon to distinguish it from another.

According to the construction of this conventional collapsible telephone set, when the second case 31 is slightly opened from its folded or closed state, this slightly opened state is detected and the microphone 27 of the first case 21 turns ON, then this ON condition is detected to turn ON the power supply of the telephone set, thereby bringing the telephone set into an operative condition.

In the above conventional collapsible telephone set, however, since the voice signal conversion circuit in the first case (body portion) and the transmitting portion (microphone) in the second case (flip) are directly connected together through a pair of connecting wires formed on a flexible printed circuit board or the like, the second case cannot easily be detached for replacement from the first case. This gives rise to the problem that there is no versatility in point of design.

The conventional collapsible telephone set involves a further problem such that in the event the second case should be slightly opened, the microswitch in the first case turns ON, and if this slightly opened state is continued, in other words, if a power-applied state is continued despite the telephone set is not in use, the power supply is wasted.

The present invention solves the above-mentioned problems and it is an object of the invention to provide a collapsible telephone set wherein a second case (flip) can be easily detached for replacement from a first case (body portion) and is therefore versatile in design.

According to the present invention there is provided a collapsible telephone set comprising one case, a switch disposed in the one case and equipped with a rotary connector, another case, and a second connector portion disposed in the another case and having a connector terminal, the switch comprising a first connector portion of a rotary type and a switch portion, the first connector portion having a connector terminal, the first and second connector portions being connected together detachably, the one and the another case being combined together detachably so that both can be opened and closed in a collapsible manner.

Preferably, upon opening or closing of any one of the two cases, both first and second connector portions rotate together, and the switch portion of the switch equipped with a rotary connector is switched over between ON and OFF conditions by the rotation of the first connector portion.

Preferably, a rotational axis of the first and second connector portions lies in a rotational axis about which the cases are opened and closed in a collapsible manner.

Preferably, the switch portion is switched over between ON and OFF conditions when one of the cases is opened about 120 degrees or more.

Preferably, a voice signal conversion circuit connected to the switch portion of the switch equipped with a rotary connector is disposed in the one case, while in the another case is disposed a transmitting portion connected to the second connector portion, the first and second connector portions being connected together electrically.

Preferably, the switch portion comprises a movable contact provided in the first connector portion and an insulating board provided with a contact which is adapted to come into contact and away from the movable contact.

Preferably, the first connector portion is provided with a rotatable holding member formed of an insulating material, the connector terminal attached to the holding member, and the movable contact formed on the back of the holding member in a connected state to the connector terminal, with a frame being provided to hold the holding member rotatably.

Preferably, a mounting member for holding the insulating board is provided and is combined with the frame to conjointly cover the insulating board.

Preferably, the switch equipped with a rotary connector is provided with the first connector portion of a rotary type, a first switch portion which is switched over between ON and OFF conditions by rotation of the first connector portion, and a second switch portion which i switched over between ON and OFF conditions also by rotation of the first connector portion.

Preferably, in the one case are disposed the voice signal conversion circuit and a power supply circuit, the first switch portion of the switch equipped with a rotary connector is connected to the voice signal conversion circuit, and the second switch portion is connected to the power supply circuit, while in the another case is disposed the transmitting portion connected to the second connector portion is disposed, further, the first and second connector portions are electrically connected together so that the first and second switch portions are switched over between ON and OFF conditions upon opening or closing of both cases.

Preferably, the first switch portion comprises a first movable contact provided in the first connector portion and a first contact adapted to come into contact with and away from the first movable contact, the second switch portion comprises a rotating member, a second movable contact provided in the rotating member, and a second contact adapted to come into contact with and away from the second movable contact, and the first switch portion is switched over between ON and OFF conditions by rotation of the first connector portion, the rotating member being rotated by the first connector portion to switch over the second switch portion between ON and OFF conditions.

Preferably, there are provided a rotatable holding member formed of an insulating material and provided with the first movable contact and a shaft, and an insulating board having a hole, with the first contact being attached to the insulating board, the shaft being projected through the hole of the insulating board, and the rotating member is rotated by the thus-projected shaft.

Preferably, the first connector portion comprises a rotatable holding member formed of an insulating material and having a shaft, connector terminals attached to the holding member, and a first movable contact provided on the back of the holding member, the first switch portion comprises the first movable contact, a first contact adapted to come into contact with and away from the first movable contact, and a first insulating board with the first contact attached thereto, and the second switch portion comprises a rotating member, a second movable contact provided in the rotating member, a second contact adapted to come into contact with and away from the second movable contact, and a second insulating board with the second contact attached thereto, the shaft of the holding member being passed through a hole formed in the first insulating board, allowing the rotating member to rotate through the shaft.

Further, preferably, there are provided a mounting member for holding the first and second insulating boards and a frame for covering the first and second insulating boards from above, the mounting member being combined with the frame to conjointly cover the first and second insulating boards.

### BRIEF DESCRIPTION OF THE DRAWINGS

Fig. 1 is an exploded perspective view of a collapsible telephone set according to an embodiment of the present invention;
Fig. 2 is a perspective view showing a first example of a switch equipped with a rotary connector used in the collapsible telephone set;
Fig. 3 is a front view thereof;
Fig. 4 is an exploded perspective view thereof;
Fig. 5 is a perspective view of a housing of the switch equipped with a rotary connector shown in Fig. 4;
Fig. 6 is a perspective view showing a second example of a switch equipped with a rotary connector used in the collapsible telephone set;
Fig. 7 is an exploded perspective view thereof; and
Fig. 8 is a perspective view of a conventional collapsible telephone set.

A collapsible telephone set according to an embodiment of the present invention will be described hereinunder with reference to the accompanying drawings, as an example only.

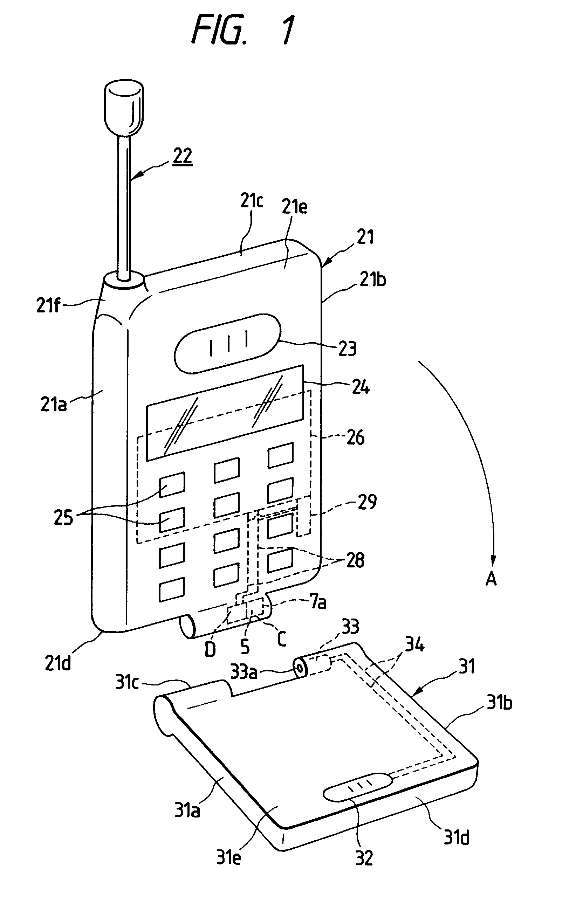

Fig. 1 is an exploded perspective view of the collapsible telephone set embodying the present invention.

As shown in the same figure, the collapsible telephone set comprises a first case 21 of generally box-shaped serving as a body portion and formed by molding from a synthetic resin, and a second case 31 of generally box-shaped called flip (lid) for example and formed also by molding from a synthetic resin.

The first case 21 is surrounded on four sides with opposed side walls 21a, 21b and opposed upper wall 21c and lower wall 21d and the thus-surrounded space is closed by a front wall 21e and a back wall (not shown).

Within the first case 21 are disposed a voice signal conversion circuit 26 for converting at least a voice signal into an electric signal; a switch C equipped with a rotary connector, the switch C having a first connector portion 5 of a rotary type and a switch portion D, the first connector portion 5 having male type connector terminals 7a; a pair of first connecting wires 28, 28 for electrically connecting the voice signal conversion circuit 26 electrically with the switch portion D of the switch C equipped with a rotary connector, the first connecting wires 28, 28 being constituted of, that is, copper foil formed on a flexible printed circuit board or the like; and a power supply circuit 29 for driving the voice signal conversion circuit 26.

In the front wall 21e of the first case 21 are disposed a receiving portion 23 which is, that is, a speaker, a display portion 24 constituted of a liquid crystal display for example, and an operating portion 25 which, for example, comprises a plurality of push-button switches.

The switch C equipped with a rotary connector is mounted near the lower wall 21d of the first case 21 in an exposed state of the connector terminals 7a of the first connector portion 5 from the lower wall 21d.

An antenna 22, which is constituted of a metallic rod, is disposed near and along the left-hand side wall 21a so that it can be drawn out from a protuberance 21f of the first case 21 to the exterior of the first case while being guided by the protuberance 21f and can also be retracted.

The second case 31 is surrounded on four sides with opposed side walls 31a, 31b and opposed upper wall 31c and lower wall 31d and the thus-surrounded space is closed by a front wall 31e and a back wall (not shown). At a lower end portion of the front wall 31e of the second case 32 is disposed a transmitting portion 32 which is, that is, a microphone for the transmission of a voice signal, while in the vicinity of the upper wall 31c is disposed a second connector portion 33 having female type connector terminals 33a. Within the second case 31 are disposed a pair of second connecting wires 34, 34 for sending the voice signal from the transmitting portion 32 to the second connector portion 33, the second connecting wires 34, 34 being constituted of, that is, copper foil formed on a flexible printed circuit board or the like.

The lower wall 21d of the first case 21 and the upper wall 31c of the second case 31 are connected together in a desired manner permitting easy disconnection for replacement such as a snap-in method or a fixing method using screw capable of being removed. Both cases 21 and 31 can be folded in two, that is, can be opened and closed, with the lower and upper walls 21d, 31c as a fulcrum of rotation.

In this case, the first connector portion 5 of the switch equipped with a rotary connector disposed in the first case 21 and the second connector portion 33 of the second case 31 are connected together in a disconnectable manner, and a rotational axis of the first and second connector portions 5, 33 in this connected state lies in a rotational axis about which the first and second cases 21, 31 are opened and closed in a collapsible manner.

With the lower wall 21d of the first case 21 and the upper wall 31c of the second case 31 connected together, if the connector terminals 7a of the first connector portion 5 in the switch C equipped with a rotary connector are inserted (connected) into the connector terminals 33a of the second connector portion 33 and if the first and second cases 21, 31 are in a closed state, the switch portion D of the switch C is OFF.

Then, when the second case 31 is opened (rotated), that is, about 180 degrees, the second connector portion 33 disposed in the second case 31 rotates, whereby the first connector portion 5 of the switch C, which is connected to the second connector portion 33, is rotated. When the first connector portion 5 rotates, that is, about 135 degrees or more, the switch portion D of the switch C is switched over from OFF to ON.

In the collapsible telephone set thus switched over to ON, the voice signal conversion circuit 26 of the first case 21 and the transmitting portion 32 of the second case 31 are in an electrically connected state through the first and second connector portions 5, 33.

In this state, the switch-over to ON of the switch portion D is detected, whereupon the power supply circuit 29 turns ON and the telephone set is maintained in an employable state.

With reference to the drawings, the following description is now provided about a first example of a switch equipped with a rotary connector used in the collapsible telephone embodying the invention.

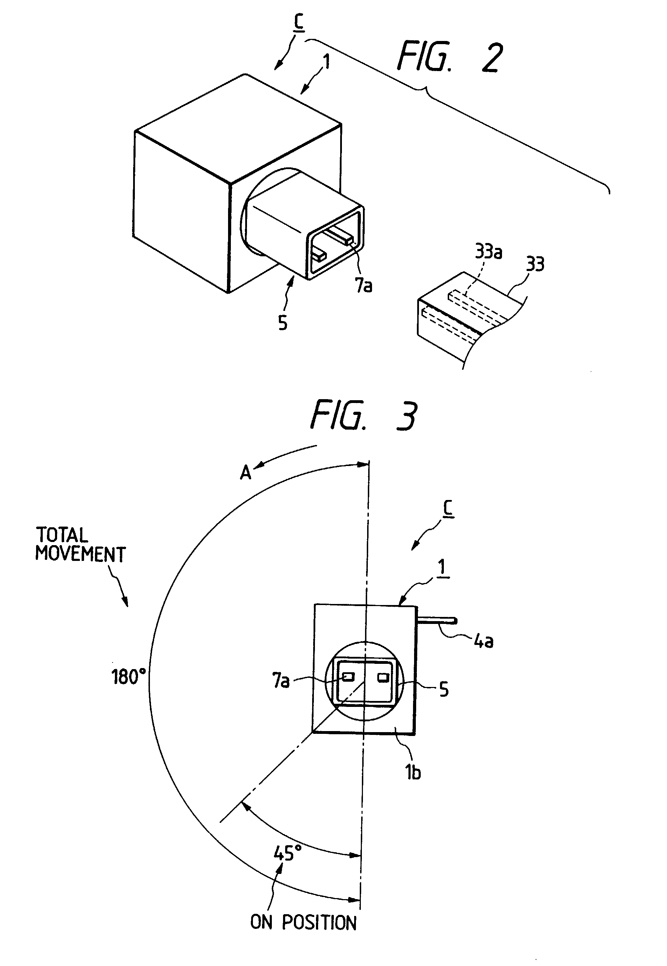

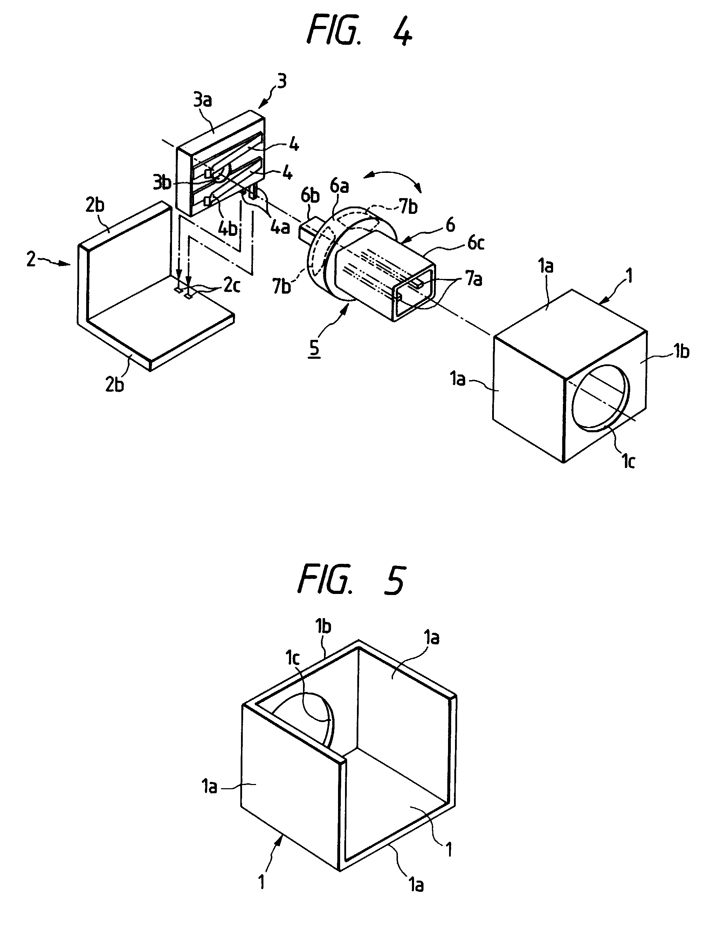

Fig. 2 is a perspective view showing a first example of a switch equipped with a rotary connector, Fig. 3 is a front view thereof, Fig. 4 is an exploded perspective view thereof, and Fig. 5 is a perspective view showing a frame of the switch illustrated in Fig. 4.

As shown in Figs. 2 to 5, the frame 1 is formed generally in a rectangular shape in section by cutting and bending a metallic plate. The frame 1 comprises side walls la assembled in U shape and a front wall 1b which connect the side walls la with one another and which has a circular hole lc formed in a nearly central position. Both underside and rear side of the frame 1 are open.

A mounting member 2 is formed generally in a L shape by molding an insulative synthetic resin material. It has a rectangular rear wall 2a, a lower wall 2b formed in a direction orthogonal to the rear wall 2a, and a plurality (that is, two) of rectangular apertures 2c, 2c formed in one side end of the lower wall 2b.

The mounting member 2 is connected to the frame 1 so that its rear wall 2a and lower wall 2b close the opening of the frame 1.

An insulating board 3 has a contact receptacle 3a formed generally in a rectangular shape by molding an insualtive synthetic resin material and a circular hole 3b formed nearly centrally of the contact receptacle 3a.

A pair of contacts 4 are each formed by a metallic plate having elasticity and are disposed on the front side of the contact receptacle 3a. An intermediate portion of each contact 4 is embedded in the contact receptacle 3a by insert molding, with a terminal 4a being provided at one end portion of each contact 4 and a contact piece 4b being provided at the opposite end which is a free end. The terminal 4a is projected outward from a lower end face of the contact receptacle 3a.

The insulating board 3 is positioned in an overlapped state with respect to the rear wall 2a of the mounting member 2 and the terminals 4a, 4a of the contacts 4 are inserted through the apertures 2c, 2c of the mounting member 2 and are projected outwards. In this state, the lower end face of the insulating board 3 is disposed on the lower wall 2b of the mounting member 2.

The first connector portion 5 is provided with a holding member 6 formed by molding an insulative synthetic resin material, male type connector terminals 7a attached to the holding member 6, and movable contacts 7b formed on the back of the holding member 6 in a connected state to the connector terminals 7a.

The holding member 6 comprises a disc-like flange 6a, a rectangular shaft 6b disposed centrally on one plane (back) side of the flange 6a and projected outward, and a cylindrical portion 6c disposed on the opposite plane (front) side of the flange 6a and projected outward, the cylindrical portion 6c being in the shape of rectangular parallelepiped and having an open front end.

The male type connector terminals 7a are disposed within the cylindrical portion 6c, and the movable contacts 7b are disposed in a generally sectorial shape along the peripheral edge portion of the back side of the flange 6a.

The cylindrical portion 6c of the holding member 6 is inserted through the hole lc formed in the front wall 1b of the frame 1 and is projected outward from the frame 1. The shaft 6b of the holding member 6 is inserted into the hole 3b of the insulating board 3. In this state, the first connector portion 5 is rotatable in a predetermined rotational range with respect to the frame 1.

The paired movable contacts 7b, 7b disposed on the flange 6a of the holding member 6 and the paired contacts 4, 4 disposed on the insulating board 3 side are opposed to each other.

In this state, when the movable contacts 7b, 7b of the first connector portion 5 are rotated to a predetermined rotational angle (135° for example) relative to the contact pieces 4b, 4b of the contacts 4, 4 formed on the insulating board 3, the contact pieces 4b, 4b and the movable contacts 7b, 7b are respectively contacted with each other, so that there is made switch-over from OFF to ON. The first connector portion 5 can rotate (up to 180° for example) and in its rotated state the ON condition is maintained. If in this state the first connector portion 5 is rotated back toward its original position, then at a predetermined rotational angle the movable contacts 7b, 7b leave the contact pieces 4b, 4b, so that there is made switch over from ON to OFF.

When the switch C equipped with a rotary connector is incorporated in the first case, the connector terminals 7a of the first connector portion 5 are connected with the connector terminals 33a of the second connector portion 33, as shown in Fig. 2.

The switch portion D of the switch C is composed of the movable contacts 7b provided in the first connector portion 5 and the insulating board 3 provided with contacts 4 which are adapted to come into contact with and away from the movable contacts 7b.

As noted above, the switch C equipped with a rotary connector is made up of the first connector portion 5 of a rotary type having the connector terminals 7a and the switch portion D. The insulating board 3, the movable contacts 7b and the contacts 4 are covered with the frame 17 and the mounting member 8.

The operation of the switch C equipped with a rotary connector will be described below.

As shown in Fig. 3, the switch C equipped with a rotary connector being considered is constituted in such a manner that the first connector portion 5 rotates in a predetermined rotational range relative to the frame 1. For example, in a rotational range of 0° to about 135°, the switch portion D of the switch C is OFF and the movable contacts 7b of the first connector portion 5 and the contacts 4 on the insulating board 3 are spaced away from each other, then in the next rotational range of about 135° to about 180°, the switch portion D turns ON and the movable contacts 7b of the first connector portion 5 and the contacts 4 of the insulating board 3 come into connection with each other.

The switch C of the above construction is incorporated in the first case 21, while the second connector portion 33 is incorporated in the second case 31, and the first and second cases 21, 31 are combined together, whereupon the first and second connector portions 5, 33 are connected together. In this way the collapsible telephone set of this embodiment is constituted. Description will be directed below to its operation.

When the collapsible telephone set is not in use, the antenna 21 is stowed into the first case 21, the first and second cases 21, 31 are folded together, and the front walls 21e, 31e of the first and second cases 21, 31 are combined together and are held in a closed state. In this state, the switch C disposed in the first case 21 is OFF.

For using the collapsible telephone set, the antenna 22 in the first case 21 is drawn out to the exterior and the second case 31, which is in a folded (closed) state, is rotated, for example 180°, in the direction of arrow A so as to be opened from the first case 21. With this rotation of the second case 31, the second connector portion 33 of the second case 31 is rotated, and with this rotation of the second connector portion 33, the first connector portion 5 of the switch C disposed in the first case 21, which connector portion 5 is connected to the second connector portion 33, rotates and causes the switch C to turn ON.

When the switch portion D of the switch C equipped with a rotary connector turns ON, the voice signal conversion circuit 26 in the first case 21 and the transmitting portion 32 in the second case 31 are electrically connected with each other through the thus-coupled first and second connector portions 5, 33.

When the switch portion D switches over to ON, this ON condition is detected and the power supply circuit 29 in the first case 21 is switched over to ON, so that the collapsible telephone set becomes available.

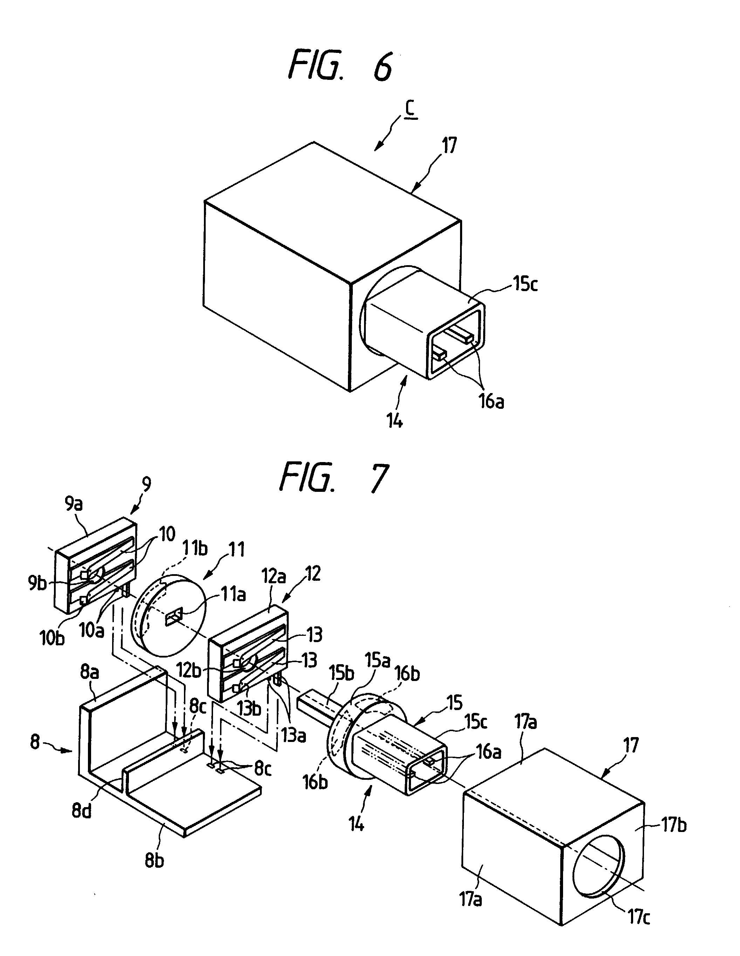

Next, a description will now be given of a second example of a switch equipped with a rotary connector used in the collapsible telephone set embodying the present invention. Fig. 6 is a perspective view showing such a second example of a switch equipped with a rotary connector and Fig. 7 is an exploded perspective view thereof. In this second example of a switch, a switch portion is of a two-stage (two-circuit) configuration, different from the above first example in which the switch portion is of a one-stage (one-circuit) configuration. But both are basically the same.

As shown in Figs. 6 and 7, the switch of this example has a switch portion of a two-stage (two-circuit) configuration, in which a frame is formed longer in the front-rear direction than in the above first example.

The frame, indicated at 17, is formed generally in a rectangular shape in section by cutting and bending a metallic plate. It has side walls 17a assembled together in U shape and a front wall 17b which connects the side walls 17a with one another and which has a circular hole 17c formed nearly centrally. The frame 17 is open on both underside and rear side thereof.

The mounting member 8 is formed generally in a L shape by molding an insulative synthetic resin material. It has a rectangular rear wall 8a, a lower wall 8b formed in a direction orthogonal to the rear wall 8a, and a partition wall 8d which is parallel to the rear wall 8a and which is projected upward from an intermediate position of the lower wall 8b. In one side end of the lower wall 8b and on both sides of the partition wall 8d are formed a plurality (that is, two each) of apertures 8c. The partition wall 8d is formed lower than the height of the rear wall 8a.

The mounting member 8 is connected to the frame 17 in such a manner that the open sides of the frame 17 are closed by the rear wall 8a and the lower wall 8b.

A second insulating board 9 has a contact receptacle 9a formed generally in a rectangular shape by molding an insulative synthetic resin material and a circular hole 9b formed nearly centrally of the contact receptacle 9a.

A pair of second contacts 10 are each formed by a metallic plate having elasticity and are disposed on the front side of the contact receptacle 9a. An intermediate portion of each contact 10 is embedded in the contact receptacle 9a by insert molding, with a terminal 10a being provided at one end portion of each contact 10 and a contact piece 10b being provided at the opposite end which is a free end. The terminal 10a is projected outward from a lower end face of the contact receptacle 9a.

The second insulating board 9 is positioned in an overlapped state with respect to the rear wall 8a of the mounting member 8 and the terminals 10a, 10a of the second contacts 10, 10 are inserted through the associated apertures 8c, 8c of the mounting member 8 and are projected outward. In this state, the lower end face of the second insulating board 9 is disposed on the lower wall 8b of the mounting member 8.

A rotating member 11 is formed in a disc shape by molding an insulative synthetic resin material, with a rectangular hole lla being formed nearly centrally of the rotating member 11. Further, a second movable contact llb of a generally sectorial shape formed by a metallic plate is disposed along the peripheral edge portion of the plane side (back side) of the rotating member 11.

The second movable contact llb of the rotating member 11 is opposed to the second contacts 10 on the second insulating board 9 so as to come into contact with and away from the second contacts 10.

A second switch portion is formed by the rotating member 11, the second movable contact llb of the rotating member 11 and the second contacts 10 adapted to contact and leave the second movable contact 11b.

As to a first insulating board 12, a detailed explanation thereof is here omitted because the construction thereof is the same as that of the second insulating board 9 described above.

The first insulating board 12 has a contact receptacle 12a and a hole 12b.

A pair of contacts 13 are each provided with a terminal 13a and a contact piece 13b, and an intermediate portion each contact 13 is embedded in the contact receptacle 12a of the first insulating board 12.

The first insulating board 12 is lapped on the partition wall 8d in parallel with the rear wall 8a of the mounting member 8 and the terminals 13a, 13a of the first insulating board 12 are inserted into the associated holes 8c, 8c of the mounting member 8. In this state, the lower end face of the first -insulating board 12 is disposed on the lower wall 8b of the mounting member 8.

A first connector portion 14 is provided with a holding member 15 formed by molding an insulative synthetic resin material, connector terminals 16a of a male type secured to the holding member 15, and first movable contacts 16b formed on the back of the holding member 15 in a connected state to the connector terminals 16a.

The holding member 15 comprises a disc-like flange 15a, a shaft 15b of a rectangular section disposed centrally on the back side of the flange 15a and projected outward, and a cylindrical portion 15c disposed on the front side of the flange 15a and projected outward, the cylindrical portion 15c being in the shape of a rectangular parallelepiped having an open front end.

The connector terminals 16a of a male type are received within the cylindrical portion 15c, and the first movable contacts 16b are disposed in a generally sectorial shape along the peripheral edge of the flange 15a.

The cylindrical portion 15c of the holding member 15 is inserted through the hole 17c formed in the front wall 17b of the frame 17 and is projected to the exterior from the frame. In this state, the first connector portion 14 is rotatable in a predetermined rotational range relative to the frame 17.

The shaft 15b of the holding member 15 is formed longer than the shaft 6b of the first connector portion 5 of the switch equipped with a rotary connector in the foregoing first example of the switch.

The shaft 15b of the holding member 15 is inserted through all of the hole 12b of the first insulating board 12, the hole lla of the rotating member 11 and the hole 9b of the second insulating board 9 so that the rotating member 11 is rotated with rotation of the holding member 15 in the first connector portion 14.

Moreover, with rotation of the holding member 15, the first movable contacts 16b disposed on the back side of the flange 15a of the holding member and the first contacts 13 disposed in the first insulating board 12 come into contact with and away from each other. A first switch portion is constituted of both the first movable contacts 16b and first contacts 13.

The switch equipped with a rotary connector of the above construction is provided with the mounting member 8 which holds the first and second insulating boards 12, 9 and is also provided with the frame 17 which cover the first and second insulating boards from above. The mounting member 8 and the frame 17 are coupled together to conjointly cover the first and second insulating boards 12, 9.

Further, the switch equipped with a rotary connector of the above construction is provided with the first connector portion 14, the first switch portion which is switched over between ON and OFF conditions by rotation of the first connector portion 14, and the second switch portion which is switched over between ON and OFF conditions also by rotation of the first connector portion 14. When the first movable contacts 16b of the first connector portion 14 are rotated to a predetermined rotational angle (120° for example), the first movable contacts 16b and the first contacts 13 are abutted against each other, and the rotating member 11 is rotated with rotation of the first connector portion 14. As a result, the second movable contact 11b of the rotating member 11 and the second contacts 10 are brought into contact with each other and are each switched over from OFF to ON. The first connector portion 14 can further rotate (that is, up to 180°) and thereafter the ON condition is maintained. In this state, if the first connector portion 14 is rotated back toward its original position, then at a predetermined rotational angle the first movable contacts 16b and the first contacts 13 come away from each other, and likewise the second movable contact llb and the second contact 10 come away from each other. In this way there is made switch-over from ON to OFF.

Since the operation of this switch equipped with a rotary connector is basically the same as that of the like switch in the previous first example, an explanation thereof is here omitted.

The switch of this example is disposed in the first case of the collapsible telephone set embodying the invention and the first and second switch portions are switched over from each other when the case is opened or closed. In this case, the first connector portion 14 of the switch is detachably connected with the second connector portion 33 disposed in the second case 31.

The first switch portion is connected to the voice signal conversion circuit 26 disposed in the first case 21, while the second switch portion is connected to the power supply circuit 29. Connection and disconnection (ON-OFF) of the voice signal conversion circuit 26 and the transmitting portion 32 are effected by turning ON and OFF of the first switch portion. Likewise, the power supply circuit 29 is turned ON and OFF by turning ON and OFF of the second switch portion. Thus, it is when the second case 31 is opened and the first connector portion 14 has turned at a predetermined rotational angle or more that power is applied to the collapsible telephone set.

Although it has been described above that the switch portions turn ON with rotation of the first connector portions 5 and 14 at a rotational angle of about 135° or about 120° in the first and second examples, no limitation is made to the rotational angles. The movable contacts may be disposed so as to turn ON at a desired rotational angle or more (that is, 120° or more) at which the cases are in a fully open condition.

As set forth above, the collapsible telephone set according to the present invention comprises one case, a switch disposed in the one case and equipped with a rotary connector, another case, and a second connector portion disposed in the another case and having a connector terminal, the switch comprising a first connector portion of a rotary type and a switch portion, the first connector portion having a connector terminal, the first and second connector portions being connected together detachably, the one and the another case being combined together detachably so that both can be opened and closed in a collapsible manner. Since the other case can be easily detached from the one case and can be replaced, there is attained an effect of providing a collapsible telephone set which is versatile in design.

In the collapsible telephone set according to the present invention, upon opening or closing of any one of the two cases, both first and second connector portions rotate together, and the switch portion of the switch equipped with a rotary connector is switched over between ON and OFF conditions by the rotation of the first connector portion. Thus, by merely opening or closing one of the cases, it is possible to effect switch-over of the switch portion, that is, an improvement can be attained in a point of operability.

In the collapsible telephone set according to the present invention, since the rotational axis of the first and second connector portions lies in the rotational axis about which both cases are opened and closed in a collapsible manner, the rotation of the first connector portion and that of the second connector portion are effected stably without any excessive force imposed thereon.

In the collapsible telephone set according to the present invention, the switch portion is switched over between ON and OFF conditions when one of the cases is opened about 120 degrees or more. Therefore, even in the event the telephone set should be held in a half-opened state, there will not be made switch-over of the switch portion, that is, the telephone set does not assume a sate of speech in which the power supply turns ON. Thus, the collapsible telephone set is employable over a long time without wasting electric power.

In the collapsible telephone set according to the present invention, a voice signal conversion circuit connected to the switch portion of the switch equipped with a rotary connector is disposed in the one case, while in the other case is disposed a transmitting portion connected to the second connector portion, the first and second connector portions being connected together electrically. Thus, the other case with the transmitting portion disposed therein can be detached easily from the one case with the voice signal conversion circuit disposed therein and also can be replaced. Consequently, there is attained an effect of providing a collapsible telephone set which is versatile in design.

In the collapsible telephone set according to the present invention, the switch portion comprises a movable contact provided in the first connector portion and an insulating board provided with a contact which is adapted to come into contact and away from the movable contact. Since the first connector portion with the movable contact disposed therein is rotatable, the switch portion is simple in structure without requiring additional member for moving the movable contact.

In the collapsible telephone set according to the present invention, since a mounting member for holding the insulating board is provided and is combined with the frame to conjointly cover the insulating board, the dust-proofing effect for the contact on the insulating board is improved.

In the collapsible telephone set according to the present invention, the switch equipped with a rotary connector is provided with a first connector portion of a rotary type, a first switch portion which is switched over between ON and OFF conditions by rotation of the first connector portion, and a second switch portion which is switched over between ON and OFF conditions also by rotation of the first connector portion. The number of switching contacts increases and this increase makes it possible to surely switch over from one to another function selected from various functions.

In the collapsible telephone set according to the present invention, the first switch portion comprises a first movable contact provided in the first connector portion and a first contact adapted to come into contact with and away from the first movable contact, and the second switch portion comprises a rotating member, a second movable contact provided in the rotating member, and a second contact adapted to come into contact with and away from the second movable contact, the rotating member being rotated by the first connector portion to switch over the first and second switch portions between ON and OFF conditions. Thus, since the first and second switch portions are switched over at a time by rotation of the first connector portion, the collapsible telephone set can be provided in a simple structure and at low cost.

Further, in the collapsible telephone set according to the present invention, the first connector portion comprises a rotatable holding member formed of an insulating material and having a shaft, a connector terminal attached to the holding member, and a first movable contact provided on the back of the holding member, the first switch portion comprises the first movable contact, a first contact adapted to come into contact with and away from the first movable contact, and a first insulating board with the first contact attached thereto, and the second switch portion comprises a rotating member, a second movable contact provided in the rotating member, a second contact adapted to come into contact with and away from the second movable contact, and a second insulating board with the second contact attached thereto, the shaft of the holding member being passed through a hole formed in the first insulating board, allowing the rotating member to rotate through the shaft. Thus, since the number of components used is small, the collapsible telephone set can be provided at low cost.

## Claims

1. A collapsible telephone set comprising:
one case;
a switch equipped with a rotary connector, said switch having a first connector portion of a rotary type and a switch portion, said first connector portion having a connector terminal;
another case; and
a second connector portion disposed in said another case and having a connector terminal,
said first and second connector portions being connected together detachably, and
said one case and said another case being combined together detachably so that both can be opened and closed in a collapsible manner.

2. A collapsible telephone set according to claim 1, wherein upon opening or closing of either of said two cases, both said first and second connector portions rotate together, and the switch portion of said switch equipped with a rotary connector is switched over between ON and OFF conditions by the rotation of said first connector portion.

3. A collapsible telephone set according to claim 1 or claim 2, wherein a rotational axis of said first and second connector portions lies in a rotational axis about which both said cases are opened and closed in a collapsible manner.

4. A collapsible telephone set according to any of claims 1 to 3, wherein said switch portion is switched over between ON and OFF conditions when one of said cases is opened about 120 degrees or more.

5. A collapsible telephone set according to any of claims 2 to 4, wherein a voice signal conversion circuit connected to the switch portion of said switch equipped with a rotary connector is disposed in said one case, while in said another case is disposed a transmitting portion connected to said second connector portion, and said first and second connector portions are connected together electrically.

6. A collapsible telephone set according to any of claims 1 to 5, wherein said switch portion comprises a movable contact provided in said first connector portion and an insulating board provided with a contact which is adapted to come into contact with and away from said movable contact.

7. A collapsible telephone set according to claim 6, wherein said first connector portion is provided with a rotatable holding member formed of an insulating material, said connector terminal attached to said holding member, and said movable contact formed on the back of the holding member in a connecting state to said connector terminals, and a frame is provided for holding said holding member rotatably.

8. A collapsible telephone set according to claim 7, wherein a mounting member for holding said insulating board is provided and is combined with said frame to conjointly cover all of said insulating board, said movable contact and said contact.

9. A collapsible telephone set according to any of claims 2 to 4, wherein said switch equipped with a rotary connector is provided with said first connector of a rotary type, a first switch portion which is switched over between ON and OFF conditions by rotation of said first connector portion, and a second switch portion which is switched over between ON and OFF conditions also by rotation of said first connector portion.

10. A collapsible telephone set according to claim 9, wherein in said one case are disposed said voice signal conversion circuit and a power supply circuit, said first switch portion of the switch equipped with a rotary connector is connected to said voice signal conversion circuit, and said second switch portion is connected to said power supply circuit, while in said another case is disposed said transmitting portion connected to said second connector portion, further, said first and second connector portions are electrically connected together so that said first and second switch portions are switched over between ON and OFF conditions upon opening or closing of both said cases.

11. A collapsible telephone set according to claim 9, wherein said first switch portion comprises a first movable contact provided in said first connector portion and a first contact adapted to come into contact with and away from said first movable contact, said second switch portion comprises a rotating member, a second movable contact provided in said rotating member, and a second contact adapted to come into contact with and away from said second movable contact, and said first switch portion is switched over between ON and OFF conditions by rotation of said first connector portion, said rotating member being rotated by said first connector portion to switch over said second switch portion between ON and OFF conditions.

12. A collapsible telephone set according to claim 10, wherein there are provided a rotatable holding member formed of an insulating material and provided with said first movable contact and a shaft, and an insulating board having a hole, with said first contact being attached to said insulating board, said shaft being projected through said hole of said insulating board, and said rotating member is rotated by said shaft thus projected.

13. A collapsible telephone set according to claim 10, wherein said first connector portion comprises a rotatable holding member formed of an insulating material and having a shaft, a connector terminal attached to said holding member, and a first movable contact provided on the back of said holding member, said first switch portion comprises said first movable contact, a first contact adapted to move into contact with and away from said first movable contact, and a first insulating board with said first contact attached thereto, and said second switch portion comprises a rotating member, a second movable contact provided in said rotating member, a second contact adapted to come into contact with and away from said second movable contact, and a second insulating board with said second contact attached thereto, said shaft of said holding member being passed through a hole formed in said first insulating board, allowing said rotating member to rotate through said shaft.

14. A collapsible telephone set according to claim 13, wherein there are provided a mounting member for holding said first and second insulating boards and a frame for covering said first and second insulating boards from above, said mounting member being combined with said frame to conjointly cover the first and second insulating boards.
